# EUROPÄISCHE PATENTSCHRIFT

(11) **EP 2 881 760 B1**
(45) Veröffentlichungstag und Bekanntmachung des Hinweises auf die Patenterteilung: **09.03.2016**
(21) Anmeldenummer: 13195604.7
(22) Anmeldetag: 04.12.2013
(51) Int. Cl.: G01V 8/20

(54) **Optoelektronischer Sensor und Verfahren zum Erfassen von Objekten**
Optoelectronic sensor and method for detecting objects
Capteur optoélectronique et procédé pour la détection d'objets

(43) Veröffentlichungstag der Anmeldung: 10.06.2015
(73) Patentinhaber: SICK AG, 79183 Waldkirch (DE)
(72) Erfinder: Eisele, Florian, 79108 Freiburg (DE); Kammer, Hans-Jürgen, 79183 Waldkirch (DE)
(74) Vertreter: Hehl, Ulrich

(56) Entgegenhaltungen:
- EP-A2- 1 118 881
- EP-B1- 2 230 538
- WO-A1-02/48745
- DE-A1- 10 027 301
- DE-A1-102008 022 791

## Beschreibung

Die Erfindung betrifft einen optoelektronischen Sensor, insbesondere ein Lichtgitter, und ein Verfahren zum Erfassen von Objekten nach dem Oberbegriff von Anspruch 1 beziehungsweise 14.

Ein weit verbreiteter optoelektronischer Sensor zur Erfassung von Objekten ist die Lichtschranke. Dabei sendet in einer Einweglichtschranke ein Lichtsender einen Lichtstrahl auf einen gegenüber angeordneten Lichtempfänger, der am Ausbleiben des Lichtsignals ein strahlunterbrechendes Objekt erkennt. In einer Reflexionslichtschranke sind Lichtsender und Lichtempfänger nebeneinander angeordnet, und der Lichtstrahl wird nach einem doppelten Lichtweg zu einem Reflektor und zurück erfasst. Ein Lichttaster ist nahezu genauso aufgebaut, nur dass kein Reflektor vorgesehen ist, sondern der Lichtstrahl von einem erfassten Objekt zurückgeworfen wird.

Ein Lichtgitter besteht im Prinzip aus einer Vielzahl parallel zueinander angeordneter eindimensionaler optoelektronischer Sensoren der soeben beschriebenen Art. Die häufigste Bauart basiert auf dem Prinzip der Einweglichtschranke, wobei die Sender und die Empfänger in jeweils einem gemeinsamen stabförmigen Gehäuse zusammengefasst sind, die sich gegenüberstehen und über die Vielzahl paralleler Überwachungsstahlen ein zweidimensionales Überwachungsfeld aufspannen.

Mit einem Lichtgitter können Objekte vermessen werden, indem bestimmt wird, welche Strahlen bei Durchtritt des Objekts durch das Überwachungsfeld unterbrochen sind. Lichtgitter werden außerdem in der Sicherheitstechnik eingesetzt, um auf einen unerlaubten Eingriff in das Überwachungsfeld hin eine Sicherungsmaßnahme einzuleiten, etwa das Abschalten einer überwachten Maschine. Man bezeichnet Lichtgitter in der ersten Anwendungsgruppe auch als Automatisierungslichtgitter, in der zweiten Anwendungsgruppe als Sicherheitslichtgitter.

Um sicherzustellen, dass innerhalb des Lichtgitters ein Lichtempfänger jeweils nur Licht von dem zugeordneten Lichtempfänger erhält, werden die einzelnen Strahlen oder Kanäle üblicherweise in sequentiellen Zyklen betrieben. Dabei werden also nacheinander, meist regelmäßig von oben nach unten oder umgekehrt, jeweils nur ein Paar aus einem Lichtsender und dessen zugehörigem Lichtempfänger gleichzeitig aktiviert. Das wiederum erfordert eine Synchronisation zwischen Lichtsender und Lichtempfänger.

Für die zyklische Auswertung an sich würde genügen, die Lichtstrahlen jeweils im zugewiesenen Zeitfenster einzuschalten und empfangsseitig über eine Schwelle zu erkennen. Es ist aber auch möglich, dem Lichtsignal durch Modulation zusätzliche Infor-, mation aufzuprägen. Solche Signalcodierungen haben Einfluss auf die Leistungsfähigkeit des Systems beispielsweise in Bezug auf maximale Reichweite oder Robustheit gegenüber optischen und elektrischen Störungen. Ein wichtiger Sonderfall optischer Störungen sind gleichartige, parallel betriebene Systeme, deren Sendelicht einen nicht zum eigenen System gehörigen Empfänger treffen kann. Dem Nutzen solcher leistungsfähigeren Signalcodierungen steht auch ein Mehraufwand an Elektronik und Rechenleistung gegenüber.

Die DE 10 2008 015 286 A1 verwendet ein Bandspreizverfahren, das aber hohe Anforderungen an die Synchronizität von Sender und Empfänger stellt. Die EP 2 230 538 B1 arbeitet mit einem Frequenzmultiplexverfahren, bei dem die empfangsseitige Demodulation auf einem Bandpassfilter beruht. Der Entwurf stark selektiver Bandpassfilter ist aber stets anspruchsvoll. Analoge Bandpassfilter unterliegen zudem Alterungseffekten, und verschiedene Empfangsfrequenzen für die diversen Frequenzkanäle können nur über aufwändige, umschaltbare Filterbänke realisiert werden. Digitale Bandpassfilter erfordern eine leistungsfähige Recheneinheit, wie ein FPGA oder einen DSP, in der möglicherweise sogar Fließkommaoperationen mit doppelter Genauigkeit erforderlich werden.

Die US 4 606 051 offenbart einen Modem-Empfänger mit einem QPSK-Demodulator (Quadrature Phase-Shift Keying). Dieser Demodulator ist für den Datenempfang einschließlich Fehlerkorrektur und nicht für ein Lichtgitter gedacht, und ohne erhebliche Veränderungen dafür auch nicht geeignet.

Das Dokument EP 1 118 881 offenbart ein Lichtgitter mit einer Sendesteuerung zum Modulieren des Lichtstrahls des Lichtgitters, und eines Auswertungseinheit zum des Erkennen der Moduliertes Signal.

Es ist daher Aufgabe der Erfindung, einen gattungsgemäßen optoelektronischen Sensor mit einfachen Mitteln für ein Frequenzmultiplexverfahren auszurüsten.

Diese Aufgabe wird durch einen optoelektronischen Sensor und ein Verfahren zum Erfassen von Objekten nach Anspruch 1 beziehungsweise 14 gelöst. Der Sensor sendet einen Lichtstrahl aus und empfängt ihn wieder, um beispielsweise durch eine Schwellbewertung des Empfangspegels aus dem Empfangssignal zu schließen, ob ein Objekt in dem Lichtstrahl erfasst wurde. Das Lichtsignal ist dabei mit einer bestimmten Modulationsfrequenz moduliert, und der Sensor spricht nur auf den Empfang eines Lichtsignals mit dieser Modulationsfrequenz an. Die Erfindung geht dann von dem Grundgedanken aus, das Empfangssignal in einem inkohärenten Demodulator zu bewerten. Dazu wird das Empfangssignal in zwei Teilempfangspfaden mit zwei gegeneinander phasenversetzten Signalen gemischt, insbesondere multipliziert. Die beiden Signale sind vorzugsweise um 90° gegeneinander phasenversetzt, also beispielsweise ein Sinus- und ein Cosinussignal oder ein entsprechend moduliertes Rechtecksignal. Die Mischprodukte werden jeweils aufintegriert und von dem Resultat der Betrag genommen, vorzugsweise durch Quadrieren. Die jeweiligen Ergebnisse werden zusammenaddiert, und dieses Ausgangssignal ist ein Maß für die Empfangsenergie bei der Modulationsfrequenz.

Die erfindungsgemäße frequenzselektive Auswertung dient in erster Linie dazu, den Fremdlichteinfall eines parallel betriebenen anderen Sensors als Störer zu erkennen. Ein solcher Sensor kann prinzipiell baugleich sein, unterscheidet sich aber durch die verwendete Modulationsfrequenz. Ist der Sensor als Lichtgitter ausgebildet, verwenden zu diesem Zweck die Kanäle innerhalb eines Sensors jeweils die gleiche Modulationsfrequenz. Prinzipiell wäre auch denkbar, Kanäle innerhalb desselben Lichtgitters durch unterschiedliche Modulationsfrequenzen voneinander zu trennen, so dass die Kanäle nicht mehr strikt nacheinander, sondern auch mehrere Kanäle gleichzeitig betrieben werden.

Die Erfindung hat den Vorteil, dass auf einfache Weise zwischen verschiedenen Modulationsfrequenzen umgeschaltet werden kann. Dies gelingt unter Verwendung einfacher und günstiger Bauteile mit einer effizienten Implementierung und wenig Rechenaufwand. Die Erzeugung der Referenzschwingung, also der Sendemodulation sowie des ersten und zweiten Signals, kann digital und damit langzeitstabil erfolgen. Es bestehen anders als bei einem Bandspreizverfahren keine besonderen Anforderungen an die Synchronisierung. Die somit erfindungsgemäß ermöglichten FDMA-Übertragungstechniken (Frequency Division Multiple Access) erhöhen die Leistungsfähigkeit des Sensors beispielsweise in Bezug auf Anzahl parallel betreibbarer Sensoren, Reichweite, Reaktionszeit und Robustheit.

Zwischen dem Integrierglied und dem Betragsglied, das insbesondere als Quadrierglied ausgebildet wird, ist bevorzugt ein A/D-Wandler vorgesehen. Die Elemente der Auswertungseinheit, wie Mischglied, Integrierglied, Betragsglied oder Addierglied, deuten auf eine analoge Schaltung als Auswertungseinheit hin. In bevorzugter Ausführungsform ist aber nur der erste Teil der Auswertungspfade analog. Dabei ist abzuwägen, ob ein analoges Bauteil oder eine dazu äquivalente digitale Berechnung beispielsweise im Hinblick auf Herstellkosten oder Leistungsfähigkeit günstiger ist. Eine A/D-Wandlung nach dem Integrierglied stellt hier eine besonders vorteilhafte Implementierung dar. Prinzipiell kann die A/D-Wandlung aber auch früher oder später erfolgen, einschließlich der Extremfälle einer rein analogen oder rein digitalen Auswertung.

Die Mischglieder sind bevorzugt als Schalter ausgebildet. Die Schalter werden dann mit der Modulationsfrequenz geöffnet und geschlossen. Das Ergebnis ist ein Mischen mit einem Rechtecksignal der Modulationsfrequenz. Diese Art der Implementierung ist besonders kostengünstig, zumal eine digitale Auswertung die zum Schalten benötigte Modulationsfrequenz als Takt unmittelbar zur Verfügung stellt.

Die Integrierglieder sind bevorzugt als Tiefpassfilter ausgebildet. Auch dafür können sehr einfache, kostengünstige Analogbauteile wie ein RC-Glied verwendet werden. Die Integrierglieder weisen unabhängig von ihrem Aufbau vorzugsweise einen Rücksetzschalter auf, damit bestimmte Integrationszeitfenster gesetzt werden können. Im Falle eines RC-Tiefpasses fließt dazu bei Schließen des Rücksetzschalters die Ladung von dem Kondensator ab.

In der Auswertungseinheit wird bevorzugt vor den beiden Teilempfangspfaden das Empfangssignal einem ersten und zweiten Puffer und von dort den Mischgliedern zugeführt, wobei ein Puffer invertierend und der andere Puffer nicht invertierend ist. Dies sorgt dafür, dass nicht große Teile der Empfangsenergie in den Mischgliedern verloren gehen, wenn diese insbesondere als Schalter ausgebildet sind. Die negativen Signalanteile werden auf diese Weise ebenfalls ausgewertet statt geblockt.

In der Auswertungseinheit wird vorzugsweise ein virtueller Massepunkt erzeugt, so dass die Signale zwar um den virtuellen Massepunkt variieren, absolut jedoch positiv bleiben. Statt Modulationen um Null wird der gesamte Pegel um den halben Maximalausschlag angehoben, so dass mit einer rein positiven Versorgung gearbeitet werden kann. Der Offset kann bei der Auswertung leicht abgezogen und so wieder berücksichtigt werden. Der virtuelle Massepunkt kann analog auch im Negativen liegen.

Die Sendersteuerung und die Auswertungseinheit sind bevorzugt für ein Codierungsschema mit einer Synchronisationsphase, einer Datenphase und einer Fremdsendererkennungsphase ausgebildet. Dieses Codierungsschema stellt sicher, dass je Auswertungszyklus die Synchronisierung gewahrt bleibt, auf Basis der Synchronisierung Objekte erfasst und anschließend mit Sicherheit ausgeschlossen wird, dass anstelle des eigenen Senders ein Fremdsender das empfangene Lichtsignal verursacht hat.

In der Synchronisationsphase werden bevorzugt von der Sendersteuerung mindestens zwei Sendebursts der Modulationsfrequenz in einem auch der Auswertungseinheit bekannten zeitlichen Abstand ausgesandt. Die Sendebursts der Synchronisationsphase sind somit durch die Modulationsfrequenz und ihren zeitlichen Abstand gekennzeichnet. Dadurch kann eine ausreichend stabile und selektive Synchronisation erfolgen. In einem Lichtgitter wird üblicherweise nur auf einem dafür dedizierten Kanal synchronisiert, etwa auf dem letzten oder ersten Strahl, und die Synchronisierung dann für zumindest den folgenden Auswertungszyklus genutzt.

Die Auswertungseinheit setzt bevorzugt während des Empfangs mindestens eines der Sendebursts nach jeder Erfassung des mit der Modulationsfrequenz modulierten Lichtstrahls die Integrierglieder zurück und zieht die Anzahl der Erfassungen innerhalb des einen Sendebursts als Maß für den Empfangspegel heran. Bei hohem Empfangspegel überschreitet das integrierte Signal eine Erkennungsschwelle früher als bei geringem Empfangspegel. Dementsprechend läuft der Integrator innerhalb der Dauer des Sendebursts je nach Empfangspegel häufiger oder seltener über die Erkennungsschwelle, und dies ermöglicht eine Pegelschätzung ohne zusätzliche Bauteile. Diese Art der Pegelschätzung kann an sich auch noch in der Datenphase genutzt werden, dient jedoch vor allem dazu, für die Datenphase eine passende Erkennungsschwelle zu setzen und erfolgt deshalb vorzugsweise vorab während der Synchronisation. Damit in die Pegelschätzung keine Artefakte des vorigen Sendebursts einfließen, wird hierfür vorzugsweise der zweite Sendeburst der Synchronisationsphase genutzt, während deren erster Sendeburst nur für eine einmalige Erkennung mit anschließendem Rücksetzen des Integrators über zumindest die Dauer eines Sendebursts verwendet wird.

In der Datenphase werden bevorzugt jeweils Sendebursts mit einer nachfolgenden Pause ausgesandt, deren Dauer für den Sensor individuell gewählt ist. Derartige individuelle Pausen sind auch schon in der Synchronisationsphase denkbar. Die Pausendauer stellt neben der Modulationsfrequenz ein zweites Merkmal dar, um eigene Lichtsignale von Fremdsignalen zu unterscheiden. Bei fehlender Übereinstimmung driften spätestens durch Kumulieren vieler aufeinanderfolgender Pausendauern die Empfangs- und Sendezeitfenster auseinander, bis kein Empfangssignal mehr erzeugt wird. Sofern dies in der Datenphase noch nicht erkannt wird, werden zumindest in der folgenden Fremdsendererkennungsphase aufgrund des Auseinanderdriftens noch Signale empfangen, und der Fremdsender wird daran erkannt.

Der Sensor ist bevorzugt als Lichtgitter ausgebildet, das in der Datenphase zyklisch Sendebursts in jeweils einem von einem Paar Lichtsender und Lichtempfänger gebildeten Kanal aussendet und empfängt. Dabei kommt die individuelle Pausendauer in jedem Kanal zumindest einmal, bei mehrfacher Abtastung je Kanal auch mehrfach zum Tragen, und sorgt so für ein rasches Auseinanderdriften, das Fremdsender sicher aufdeckt.

In der Fremdsendererkennungsphase wird bevorzugt kein Sendeburst ausgesandt und ein Fremdsender erkannt, wenn dennoch ein Lichtstrahl als empfangen erkannt wird. Sofern kein Fremdsender vorhanden ist, darf in der Fremdsendererkennungsphase nichts empfangen werden, da der eigene Sender nichts aussendet. Durch die unterschiedlichen Pausendauern wird ein anfangs möglicherweise noch zufällig passendes Zeitverhalten systematisch gestört und der Fremdsender dadurch aufgedeckt.

In einer bevorzugten Anordnung sind mindestens zwei erfindungsgemäße Sensoren vorgesehen, wobei jeder Sensor eine unterschiedliche Modulationsfrequenz und/oder eine unterschiedliche Pausendauer verwendet. Die Modulationsfrequenz und die Pausendauer sind zwei einander ergänzende Maßnahmen, um unerkannte gegenseitige Störungen der ansonsten baugleichen Sensoren zu vermeiden. Die Modulationsfrequenz allein schafft noch keine völlige Sicherheit, da auch eine verstimmte Modulationsfrequenz zwar einen deutlich geringeren, jedoch nicht verschwindenden Empfangspegel erzeugt. So kann ein zufällig perfekt ausgerichteter Fremdsender in kurzer Entfernung trotz seiner anderen Modulationsfrequenz einen höheren Empfangspegel erzeugen als der eigene Sender mit der richtigen Modulationsfrequenz bei größerem Arbeitsabstand oder ungenauer Ausrichtung. Die Pausendauer sorgt dann für zusätzliche Sicherheit, denn aufgrund der individuellen Pausendauern driften die beiden System zunehmend auseinander, und daran wird der Fremdsender erkannt. Die individuellen Modulationsfrequenzen und Pausendauern werden vorzugsweise bei parallel betriebenen Systemen parametriert. Dabei können verschiedene Sensoridentitäten zur Auswahl vorgegeben werden, die in einem gemeinsamen Arbeitsbereich nur einmal verwendet werden und zu denen jeweils ein eigenes Paar aus Modulationsfrequenz und Pausendauer hinterlegt ist. Dabei ist die Zuordnung zwischen Modulationsfrequenz und Pausendauer prinzipiell frei, jedoch sollte bevorzugt für eine sichere Unterscheidbarkeit keine Modulationsfrequenz oder Pausendauer in mehreren Sensoridentitäten vorkommen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Lichtgitters;
- Fig. 2: ein Blockdiagramm einer Auswertungseinheit zur Demodulation eines Empfangssignals mit einer bekannten Modulationsfrequenz;
- Fig. 3: ein Blockdiagramm einer weiteren Auswertungseinheit zur Demodulation eines Empfangssignals mit einer bekannten Modulationsfrequenz;
- Fig. 4: ein Blockdiagramm einer ersten Variante der Auswertungseinheit gemäß Figur 3;
- Fig. 5: ein Blockdiagramm einer zweiten Variante der Auswertungseinheit gemäß Figur 3;
- Fig. 6: eine Darstellung von Empfangssignalen und deren Erfassung in einer Ausführungsform der Erfindung bei unterschiedlichem Empfangspegel;
- Fig. 7a: eine Darstellung eines möglichen Codierungsschemas zur sicheren Fremdsendererkennung; und
- Fig. 7b: die Fortsetzung der Darstellung des Codierungsschemas gemäß Figur 7a.

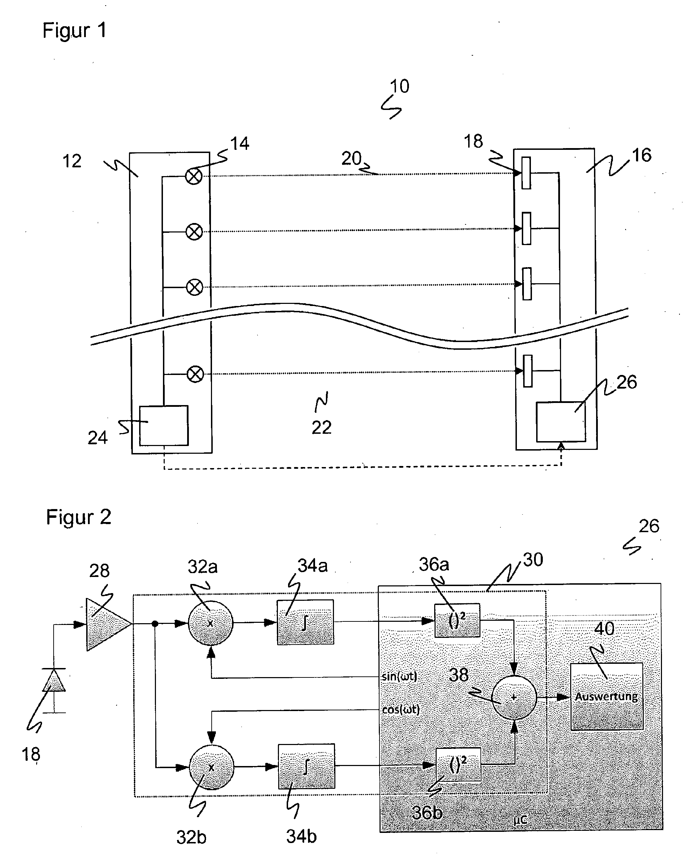

Figur 1 zeigt eine schematische Schnittdarstellung durch ein Lichtgitter 10. Das Lichtgitter 10 ist ein Beispiel eines optoelektronischen Sensors, bei dem die erfindungsgemäße Auswertung besonders vorteilhaft eingesetzt werden kann. Die Erfindung ist jedoch darauf nicht beschränkt und auch für andere optoelektronische Sensoren wie beispielsweise Lichtschranken oder Lichttaster nutzbar.

Eine Sendeeinheit 12 mit einer Vielzahl von Lichtsendern 14 und eine Empfangseinheit 16 mit einer Vielzahl von Lichtempfängern 18 sind einander gegenüberstehend angeordnet. Von den Lichtsendern 14 wird jeweils ein Lichtstrahl 20 zu einem zugeordneten Lichtempfänger 18 ausgesandt. Somit spannt das Lichtgitter 10 eine Vielzahl von Lichtstrahlen 20 auf, die auch als Kanäle bezeichnet werden, um Objekte in einem Überwachungsbereich 22 zwischen der Sendeeinheit 12 und der Empfangseinheit 16 zu erkennen.

In der Sendeeinheit 12 ist eine Sendesteuerung 24 vorgesehen, um die Aktivität der Lichtsender 14 zu steuern. Als Gegenstück ist in der Empfangseinheit 16 eine Auswertungseinheit 26 vorgesehen, um die Empfangssignale auszuwerten. Anhand der Empfangssignale erkennt die Auswertungseinheit 26, welche Lichtstrahlen 20 unterbrochen sind und welche nicht. Die Auswertungseinheit 26 ist in Figur 1 als zentrale, gemeinsame Auswertungseinheit gezeigt, der die Empfangssignale der einzelnen Kanäle beispielsweise in einem Zeitmultiplexverfahren zugeführt werden. Alternativ können mehrere Auswertungseinheiten für einzelne Kanäle oder Gruppen von Kanälen vorgesehen sein.

Die Lichtstrahlen 20 werden mit einer Signalcodierung ausgesandt und empfangen. Die Sendesteuerung 24 erzeugt dazu zyklisch und sequentiell, beispielsweise von oben nach unten, jeweils einen Sendeburst einer festgelegten Modulationsfrequenz, also beispielsweise einige Sinusschwingungen der Modulationsfrequenz gefolgt von einer definierten Pause. Die Auswertungseinheit erkennt, ob der dem jeweils aktiven Lichtsender 14 zugeordnete Lichtempfänger 26 in dem Zeitfenster des Sendebursts einen Lichtstrahl empfängt, der mit der bekannten Modulationsfrequenz moduliert ist. Damit jeweils einander zugehörige Lichtsender 14 und Lichtempfänger 26 aktiviert werden können, erfolgt eine Synchronisation zwischen Sendeeinheit 12 und Empfangseinheit 16, die durch eine gestrichelte Linie angedeutet ist. Die Synchronisation kann zwar auch leitungsgebunden sein, vorzugsweise wird aber auf optischem Weg synchronisiert. Dazu kann ein dedizierter Synchronisationskanal vorgesehen sein, etwa der oberste oder der unterste Lichtstrahl 20. Die Auswertung wird im Folgenden unter Bezugnahme auf die Figuren 2 bis 8 näher erläutert.

Figur 2 zeigt ein Blockdiagramm einer ersten Ausführungsform der Auswertungseinheit 26. Das Empfangssignal des beispielsweise als Photodiode ausgebildeten Lichtempfängers 18 wird in einem nachgeschalteten Konditionierverstärker 28 verstärkt, dessen Ausgangssignal einem mit gestricheltem Rechteck umrandeten inkohärenten Demodulator 30 zugeführt wird. In dem Demodulator 30 sind zwei Teilempfangspfade vorgesehen, in denen das verstärkte Empfangssignal zunächst in Mischgliedern 32a-b mit einem Sinus- beziehungsweise einem Cosinussignal gemischt, insbesondere multipliziert wird. Die Frequenz des Sinus- und Cosinussignals ist die erwartete Empfangsfrequenz, mit welcher der zugehörige Lichtsender 14 den Lichtstrahl 20 moduliert. Dieses Vorgehen für die Demodulation ist phasenunabhängig, was ein großer Vorteil ist, weil keinerlei besondere Anforderungen an die Synchronizität zwischen Sende- und Empfangssignal gestellt sind. Die Ergebnisse der Mischung werden jeweils einzeln in Integriergliedern 34a-b aufintegriert.

In der Ausführungsform gemäß Figur 2 findet an dieser Stelle der Verarbeitungskette ein Übergang von analog nach digital statt. Beim Eintritt in eine digitale Recheneinheit, beispielsweise einen Mikroprozessor 36, werden die Signale daher in einem nicht dargestellten A/D-Wandler digitalisiert. Der Übergang zwischen analog und digital kann aber auch an einer anderen Stelle in der Verarbeitungskette stattfinden.

Der Mikroprozessor 36 bildet in Quadrierblöcken 36a-b die Signalquadrate und addiert sie anschließend in einem Addierblock 38 miteinander. Das Ergebnis ist ein Maß für die Empfangsenergie bei der Empfangsfrequenz und wird nach der somit erfolgten Demodulation einem Auswertungsblock 40 übergeben. Dort wird beispielsweise mit einer Empfangsschwelle verglichen. Um das Ziehen einer Quadratwurzel zu vermeiden, wird vorzugsweise mit einer entsprechend angepassten Empfangsschwelle gearbeitet.

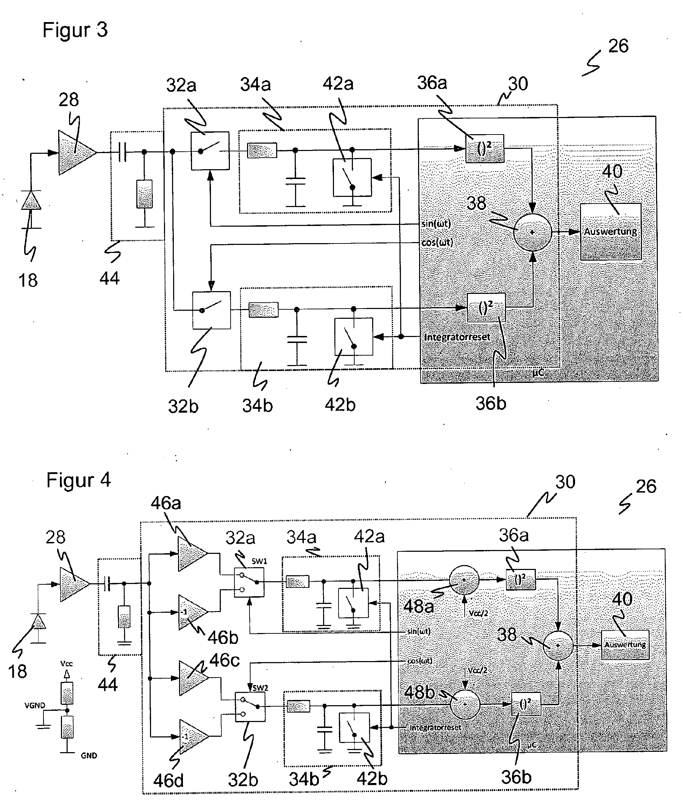

Figur 3 zeigt ein Blockdiagramm einer weiteren Ausführungsform der Auswertungseinheit 26, deren Vorteil die Verwendung von besonders kostengünstigen Schaltungselementen ist. Der grundsätzliche Aufbau entspricht demjenigen der Ausführungsform gemäß Figur 2, und wie in der gesamten Beschreibung bezeichnen gleiche Bezugszeichen die gleichen Merkmale, und bekannte Elemente werden nicht erneut erläutert.

Die Mischglieder 32a-b sind in dieser Ausführungsform einfache Schalter. Die Sinus- und Cosinussignale werden durch Rechteckschwingungen der gleichen Empfangsfrequenz angenähert. Die Integrierglieder 34a-b sind als RC-Tiefpassfilter realisiert, deren Kapazitäten durch Schalter 42a-b schnell entladen werden können. Das führt zu einem Reset der Integrierglieder 34a-b, damit der Demodulator 30 schnell wieder zum Empfang eines weiteren Empfangssignals bereit ist.

Um mit dem Demodulator 30 Störsignale wirkungsvoll zu dämpfen, sollte das Störsignal gleichanteilsfrei sein. Deshalb wird ein beispielsweise als RC-Glied realisierter Hochpassfilter 44 zwischen den Vorverstärker 28 und den Demodulator 30 geschaltet. Die Schalter 32a-b sind vorzugsweise in der Lage, positive wie negative Signale durchzuschalten. Die Grenzfrequenz des Hochpassfilters 44 sollte möglichst hoch gewählt sein und sich beispielsweise nach der Grenzfrequenz des übrigen Empfangspfades richten. Die Zeitkonstanten der beiden als Integrierglieder 34a-b fungierenden RC-Tiefpassfilter bemessen sich vorzugsweise nach der Burstlänge, sind untereinander gleich und deutlich länger als diejenige des Hochpassfilters 44.

Ein Nachteil an der Ausführungsform gemäß Figur 3 ist, dass ein nicht unerheblicher Teil der Signalenergie verlorengeht, weil die Schalter 32a-b die Hälfte des Signals blockieren. Figur 4 zeigt ein Blockdiagramm einer weiteren Ausführungsform der Auswertungseinheit 26, die diesen Nachteil nicht aufweist. Das wird durch zusätzliche invertierende und nicht invertierende Puffer 46a-d erreicht. Die Mischglieder 32a-b sind als Wechselschalter ausgebildet und schalten beim Mischvorgang je nach Vorzeichen der Amplitude der Sinus- und Cosinussignale approximierenden Rechteckschwingung den invertierenden oder den nicht invertierenden Puffer 46a-d durch.

Damit die Ausführungsform gemäß Figur 4 mit einer positiven Versorgungsspannung Vcc arbeiten kann, wird ein virtueller Massepunkt erzeugt, der beispielsweise bei der halben Versorgungsspannung Vcc/2 liegt. Das dafür verwendete Offset von Vcc/2 wird in weiteren Addierblöcken 48a-b bei den Ausgangssignalen der Integrierglieder 34a-b kompensiert.

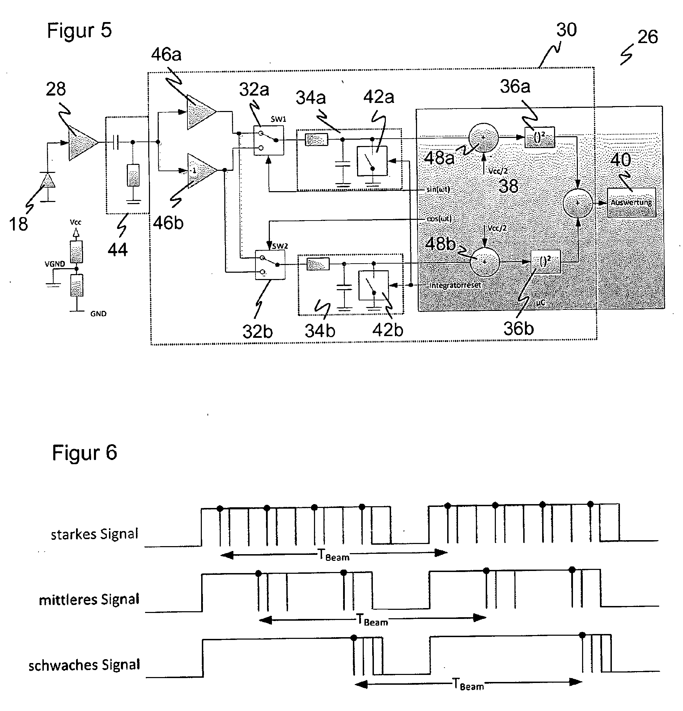

Figur 5 zeigt ein Blockdiagramm einer Variante der Ausführungsform gemäß Figur 4. Der Unterschied besteht darin, dass hier nur jeweils ein invertierender und ein nicht invertierender Puffer 46a-b vorgesehen sind, die von beiden Teilempfangspfaden genutzt werden.

Die Signalauswertung mit rücksetzbaren Integriergliedern 34a-b kann vorteilhaft genutzt werden, um ohne zusätzliche Elemente eine Empfangspegelschätzung vorzunehmen. Das ist in Figur 6 für ein starkes, ein mittleres und ein schwaches Signal illustriert. Es werden jeweils zwei als lange Rechtecke gezeichnete Sendebursts der Länge T_{Beam} empfangen. Kleine Kreise bezeichnen den Detektionszeitpunkt, an dem das Ausgangssignal des Demodulators 30 die Empfangsschwelle übertritt. Danach werden für eine mit einem weiteren Rechteck dargestellte kurze Dauer die Integrierglieder 34a-b zurückgesetzt, und anschließend wird erneut empfangen. Im Fall eines starken Signals läuft das aufintegrierte Empfangssignal schon kurz nach dem Integratorreset erneut über die Schwelle, und zwar im Beispiel insgesamt vier Mal je Sendeburst. Bei dem mittleren Signal dauert es länger, so dass es nur zu zwei Detektionen je Sendeburst kommt. Nach der ersten Detektion des schwachen Signals reicht die Restdauer des Sendebursts für eine weitere Detektion nicht aus. Die Anzahl Detektionen je Sendeburst bildet daher ein einfach bestimmbares Maß für den Empfangspegel.

Die auf eine feste Empfangsfrequenz abgestimmte Demodulation wird in dem Lichtgitter 10 genutzt, um zu erkennen, ob der von einem Lichtempfänger 18 empfangene Lichtstrahl 20 tatsächlich von dem zugeordneten Lichtsender 14 stammt. Ein Fremdsender, der ungewollt ebenfalls in den Lichtempfänger 18 einstrahlt, wird bei nicht übereinstimmender Modulationsfrequenz deutlich unterdrückt. Dafür ist natürlich darauf zu achten, dass parallel betriebene Kanäle oder Sensoren 10 unterschiedliche Modulationsfrequenzen verwenden.

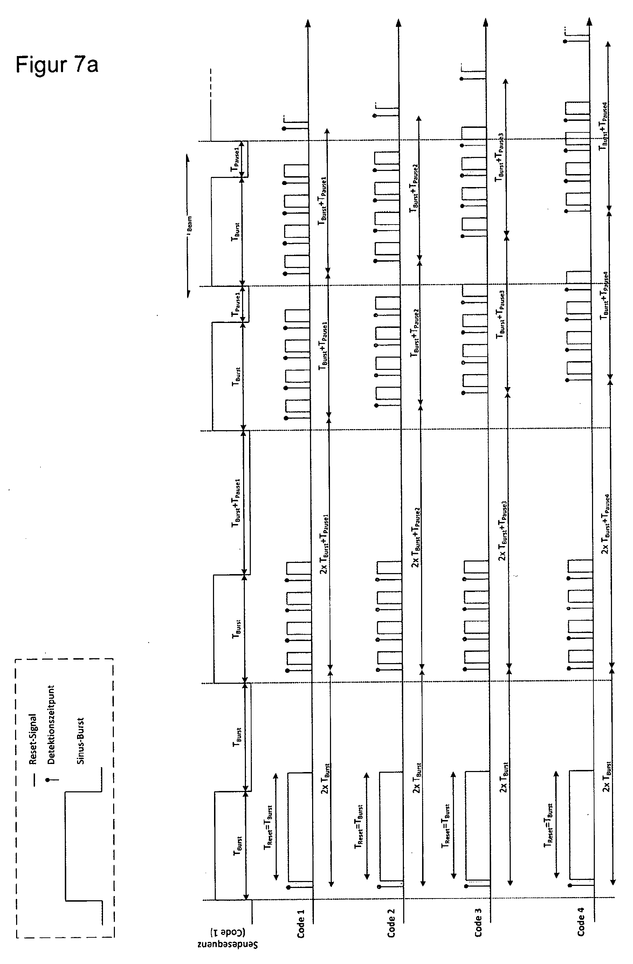

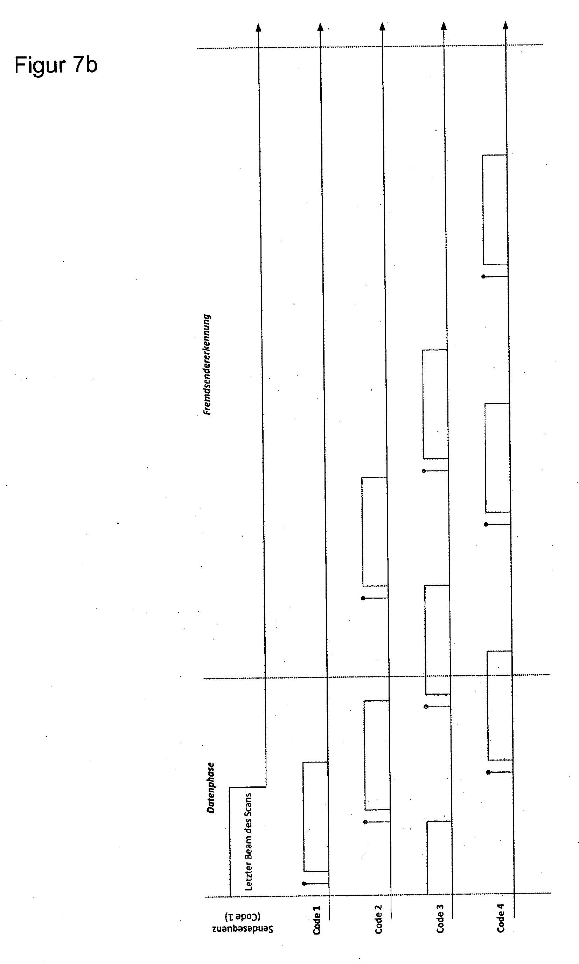

Für ein Sicherheitslichtgitter, das zum Schutz von Personen vor einer Gefahrenquelle eingesetzt wird, sind die Anforderungen an eine sichere Auswertung besonders hoch. Um die Sicherheit zu erhöhen, kann zusätzlich zu der bisher beschriebenen frequenzselektiven Detektion eine zeitliche Codierung eingesetzt werden. Dies wird nun anhand eines in Figur 7 dargestellten Codierungsschemas erläutert. Dabei setzt Figur 7b die Figur 7a zeitlich fort, die beiden Darstellungen sind nur aus Platzgründen voneinander getrennt. Dieses Codierungsschema erhöht die Sicherheit gegen Fremdsender auch ohne ein Frequenzverfahren, lässt sich jedoch besonders vorteilhaft damit kombinieren und sorgt dann durch gleich zwei Effekte, nämlich die Frequenzcodierung und die zeitliche Codierung, für eine sichere Fremdsendererkennung.

Das Codierungsschema zeigt insgesamt einen sequentiellen Auswertungszyklus durch die Kanäle von vier parallel betriebenen Lichtgittern. Horizontal ist die Zeit aufgetragen, wobei der Auswertungszyklus grob in die drei Phasen Synchronisationsphase, Datenphase und Fremdsendererkennungsphase unterteilt ist. Vertikal übereinander sind von oben nach unten die Sendesequenz des ersten Lichtgitters sowie der Empfangsverlauf aller vier Lichtgitter gezeigt. Dabei verwenden das erste Lichtgitter bis vierte Lichtgitter in dieser Reihenfolge sowohl sende- als auch empfangsseitig die durch Code1 bis Code4 bezeichneten Modulationsfrequenzen und Pausen. Die Sendesequenzen des zweiten bis vierten Lichtgitters sind nicht dargestellt, weil sie aus der Sendesequenz des ersten Lichtgitters unmittelbar abgeleitet werden können.

Als ein Zahlenbeispiel kann eine Sendeburstdauer T_{Burst} = 20µs und für die Modulationsfrequenzen f und die Pausen T_{Pause} Folgendes gewählt werden:

| | | |
|---|---|---|
| Code1 | f=400 kHz | T_{Pause1}=20µs |
| Code2 | f=500kHz | T_{Pause2}=22µs |
| Code3 | f=600kHz | T_{Pause3}=24µs |
| Code4 | f=700 kHz | T_{Pause4}=26µs |

Die Werte für f und T_{Pause} müssen nicht wie in diesem Beispiel monoton miteinander zusammenhängen.

Die anfängliche Synchronisation dient dazu, dass beim sequentiellen Scan durch die Kanäle während der nachfolgenden Datenphase die Sendebursts und Empfangszeitfenster des jeweils aktiven Kanals aufeinander abgestimmt sind. In der Synchronisationsphase werden als charakteristisches Muster jeweils zwei Sendebursts der festen Modulationsfrequenz und im festen zeitlichen Abstand von beispielsweise 2*T_{Burst} ausgesandt. Auf den zweiten Sendeburst folgt eine für das i-te Lichtgitter individuelle Sendepause von T_{Burst}+T_{Pause,i}. Die Synchronisation findet vorzugsweise auf einem bestimmten Kanal statt, wozu im Beispiel der Figur 7 der erste Strahl ausgewählt wurde. Nach erfolgtem Empfang des ersten Sendebursts werden die Integrierglieder 34a-b des Empfängers zumindest für die Dauer des Sendebursts zurückgesetzt. Während des Empfangs des zweiten Sendebursts dagegen erfolgt jeweils nur ein kurzes Rücksetzen der Integrierglieder 34a-b. Das ermöglicht, wie zu Figur 6 erläutert, den Empfangspegel zu schätzen. Nachdem das charakteristische Muster erfolgreich erkannt und das Lichtgitter damit synchronisiert ist, beginnt die Datenphase mit der eigentlichen Erkennung von Objekten in dem Überwachungsfeld 22. Das charakteristische Muster für die Synchronisation ist beispielhaft zu verstehen, so kann die Synchronisation etwa auch auf mehr als zwei Sendebursts basieren oder ohne eine Intensitätsschätzung erfolgen.

In der Datenphase wird von dem jeweiligen Lichtgitter sequentiell, beispielsweise beginnend mit dem ersten Strahl, das Überwachungsfeld 22 mit den Lichtstrahlen 20 abgetastet. Pro Strahl oder Kanal wird jeweils mindestens ein Sendeburst ausgesandt, auf den eine Pause von mindestens der Dauer des Sendebursts folgt. Die Modulationsfrequenz und die Dauer der Pause werden anhand des Codes des Lichtgitters festgelegt und variieren somit von Lichtgitter zu Lichtgitter. Die Integrierglieder 34a-b werden nach einer Detektion für mindestens die Dauer des Sendebursts im Reset-Zustand gehalten und dadurch sichergestellt, dass maximal eine Detektion pro Sendeburst erfolgt.

Selbst wenn anfänglich alle Lichtgitter zufällig perfekt synchronisiert waren, wie dies in Figur 7 der Fall ist, verschieben sich die Empfangsfenster zunehmend gegeneinander. Die individuelle Dauer der Pausen stellt also sicher, dass Lichtgitter mit unterschiedlichen Codes auseinanderdriften. Nach kürzester Zeit ist damit die Gefahr einer Synchronisation auf ein benachbartes System eliminiert. Außerdem sorgt das Auseinanderdriften spätestens in der Fremdsendererkennungsphase dafür, dass Fremdsender zuverlässig vom eigenen Sender unterschieden werden.

Im Anschluss an die Datenphase werden nämlich in der Fremdsendererkennungsphase die Lichtsender stillgeschaltet, senden also keine optischen Signale aus. Gleichzeitig werden der oder die Lichtempfänger 18, die auf Fremdsendereinfall geprüft werden, aktiv geschaltet. Dabei wird kein Eingangssignal erwartet. Sollte dennoch etwas empfangen werden, so muss dies auf eine fremde Quelle zurückzuführen sein, wie beispielsweise ein baugleiches System, das mit einer gleichen oder ähnlichen Modulationsfrequenz sendet. Das Lichtgitter erkennt dies, und im Falle einer Sicherheitsapplikation erfolgt eine sicherheitsgerichtete Abschaltung.

Im Beispiel der Figur 7 beendet das erste Lichtgitter mit der kürzesten Pause T_{Burst1} zuerst die Datenphase. Aus der Illustration ist unmittelbar ersichtlich, dass spätere Sendebursts der anderen Lichtgitter erkannt würden, wenn sie mit ausreichender Intensität auf den Lichtempfänger des ersten Lichtgitters treffen. Die Fremdsendererkennung funktioniert aber auch in den anderen Lichtgittern mit längeren Pausen T_{Burst,i}, denn aufgrund des Auseinanderdriftens wird sich spätestens nach einigen Auswertungszyklen auch eine entsprechende Situation einstellen, in der fremde Sendebursts in die Fremdsendererkennungsphase der anderen Lichtgitter fallen.

## Patentansprüche

1. Optoelektronischer Sensor (10), insbesondere Lichtgitter, mit einem Lichtsender (14) zum Aussenden eines Lichtstrahls (20), einem Lichtempfänger (18) zum Erzeugen eines Empfangssignals, einer Sendersteuerung (24) zum Modulieren des Lichtstrahls (20) mit einer Modulationsfrequenz und einer Auswertungseinheit (26), die dafür ausgebildet ist, anhand des Empfangssignals zu erkennen, ob ein mit der Modulationsfrequenz modulierter Lichtstrahl (20) empfangen wurde,
**dadurch gekennzeichnet,**
**dass** die Auswertungseinheit (26) zwei Teilempfangspfade aufweist, an deren Eingang jeweils das Empfangssignal anliegt und deren jeweiliges Teilausgangssignal einem Addierglied (38) zugeführt wird, wobei jeder Teilempfangspfad ein Mischglied (32a-b), ein Integrierglied (34a-b) und ein Betragsglied (36a-b) aufweist, an dem Mischglied (32a-b) des ersten Teilempfangspfades ein erstes Signal der Modulationsfrequenz und an dem Mischglied (32b-a) des zweiten Teilempfangspfades ein zweites Signal der Modulationsfrequenz anliegt, das zu dem ersten Signal phasenversetzt ist, und dass die Auswertungseinheit (26, 40) das Ausgangssignal des Addierglieds (38) bewertet, um zu erkennen, ob ein mit der Modulationsfrequenz modulierter Lichtstrahl (20) empfangen wurde.

2. Sensor (10) nach Anspruch 1,
wobei zwischen dem Integrierglied (34a-b) und dem Betragsglied (36a-b) ein A/D-Wandler vorgesehen ist.

3. Sensor (10) nach Anspruch 1 oder 2,
wobei die Mischglieder (32a-b) als Schalter ausgebildet sind.

4. Sensor (10) nach einem der vorhergehenden Ansprüche,
wobei die Integrierglieder (34a-b) als Tiefpassfilter ausgebildet sind.

5. Sensor (10) nach einem der vorhergehenden Ansprüche,
wobei in der Auswertungseinheit (26, 40) vor den beiden Teilempfangspfaden das Empfangssignal einem ersten und zweiten Puffer (46a-d) und von dort den Mischgliedern zugeführt wird, wobei ein Puffer (46b,d) invertierend und der andere Puffer (46a,c) nicht invertierend ist.

6. Sensor (10) nach einem der vorhergehenden Ansprüche,
wobei in der Auswertungseinheit (26) ein virtueller Massepunkt erzeugt wird, so dass die Signale zwar um den virtuellen Massepunkt variieren, absolut jedoch positiv bleiben.

7. Sensor (10) nach einem der vorhergehenden Ansprüche,
wobei die Sendersteuerung (24) und die Auswertungseinheit (26) für ein Codierungsschema mit einer Synchronisationsphase, einer Datenphase und einer Fremdsendererkennungsphase ausgebildet sind.

8. Sensor (10) nach Anspruch 7,
wobei in der Synchronisationsphase von der Sendersteuerung (24) mindestens zwei Sendebursts der Modulationsfrequenz in einem auch der Auswertungseinheit (26, 40) bekannten zeitlichen Abstand ausgesandt werden.

9. Sensor (10) nach Anspruch 8,
wobei die Auswertungseinheit (26) während des Empfangs mindestens eines der Sendebursts nach jeder Erfassung des mit der Modulationsfrequenz modulierten Lichtstrahls die Integrierglieder (34a-b) zurücksetzt und die Anzahl der Erfassungen innerhalb des einen Sendebursts als Maß für den Empfangspegel heranzieht.

10. Sensor (10) nach einem der Ansprüche 7 bis 9,
wobei in der Datenphase jeweils Sendebursts mit einer nachfolgenden Pause ausgesandt werden, deren Dauer für den Sensor (10) individuell gewählt ist.

11. Sensor (10) nach Anspruch 10,
der als Lichtgitter ausgebildet ist und in der Datenphase zyklisch Sendebursts in jeweils einem von einem Paar Lichtsender (14) und Lichtempfänger (18) gebildeten Kanal aussendet und empfängt.

12. Sensor (10) nach einem der Ansprüche 7 bis 11,
wobei in der Fremdsendererkennungsphase kein Sendeburst ausgesandt wird und ein Fremdsender erkannt wird, wenn dennoch ein Lichtstrahl empfangen wird.

13. Anordnung mindestens zweier Sensoren nach einem der vorhergehenden Ansprüche, wobei jeder Sensor eine unterschiedliche Modulationsfrequenz und/oder eine unterschiedliche Pausendauer verwendet.

14. Verfahren zum Erfassen von Objekten, bei dem ein mit einer Modulationsfrequenz modulierter Lichtstrahl (20) ausgesandt und aus dem empfangenen Lichtstrahl (20) ein Empfangssignal erzeugt wird, anhand dessen erkannt wird, ob der empfangene Lichtstrahl (20) mit der Modulationsfrequenz moduliert ist,
**dadurch gekennzeichnet,**
**dass** das Empfangssignal in zwei Teilempfangspfaden einmal mit einem ersten Signal der Modulationsfrequenz und einmal mit einem zweiten Signal der Modulationsfrequenz gemischt wird, das zu dem ersten Signal phasenversetzt ist, dass die jeweils gemischten Signale einzeln integriert und dann quadriert und anschließend miteinander zu einem Summensignal aufaddiert werden, und dass anhand des Summensignals beurteilt wird, ob ein mit der Modulationsfrequenz modulierter Lichtstrahl (20) empfangen wurde.

15. Verfahren nach Anspruch 14,
wobei mehrere Sensoren gleichzeitig mit einer Modulationsfrequenz modulierte Lichtsignale in Form von Sendebursts aussenden und empfangen, wobei die Sensoren unterschiedliche Modulationsfrequenzen und Pausendauern zwischen den Sendebursts verwenden.

## Claims

1. An optoelectronic sensor (10), in particular a light grid, comprising a light transmitter (14) for transmitting a light beam (20), a light receiver (18) for generating a received signal, a transmitter control (24) for modulating the light beam (20) by a modulation frequency and an evaluation unit (26) which is configured to recognise with reference to the received signal whether a light beam (20) modulated by the modulation frequency was received,
**characterised in that**
the evaluation unit (26) has two part reception paths at whose inputs the respective received signal is applied and whose respective part output signals are supplied to an adding element (38), wherein each part reception path has a mixing element (32a-b), an integral element (34a-b) and an amount element (36a-b); **in that** a first signal of the modulation frequency is applied to the mixing element (32a-b) of the first part reception path and a second signal of the modulation frequency is applied to the mixing element (32b-a) of the second part reception path, said second signal being phase-shifted with respect to the first signal; and **in that** the evaluation unit (26, 40) evaluates the output signal of the adding element (38) to recognise whether a light beam (20) modulated by the modulation frequency was received.

2. A sensor (10) in accordance with claim 1,
wherein an A/D converter is provided between the integral element (34a-b) and the amount element (36a-b).

3. A sensor (10) in accordance with claim 1 or claim 2,
wherein the mixing elements (32a-b) are configured as switches.

4. A sensor (10) in accordance with any one of the preceding claims,
wherein the integral elements (34a-b) are configured as low pass filters.

5. A sensor (10) in accordance with any one of the preceding claims,
wherein the received signal is supplied in the evaluation unit (26, 40), in front of the two part reception paths, to a first and second buffer (46a-d) and from there to the mixing elements, with one buffer (46b, d) being inverting and the other buffer (46a, c) being non-inverting.

6. A sensor (10) in accordance with any one of the preceding claims,
wherein a virtual grounding point is generated in the evaluation unit (26) such that the signals admittedly vary about the virtual grounding point, but remain positive in absolute terms.

7. A sensor (10) in accordance with any one of the preceding claims,
wherein the transmitter control (24) and the evaluation unit (26) are configured for an encoding scheme having a synchronisation phase, a data phase and an external transmitter recognition phase.

8. A sensor (10) in accordance with claim 7,
wherein at least two transmission bursts of the modulation frequency are transmitted by the transmitter control (24) in the synchronisation phase in a time interval also known to the evaluation unit (26, 40).

9. A sensor (10) in accordance with claim 8,
wherein the evaluation unit (26) resets the integral elements (34a-b) during the reception of at least one of the transmission bursts after each detection of the light beam modulated by the modulation frequency and uses the number of detections within the one transmission burst as a measure for the reception level.

10. A sensor (10) in accordance with any one of the claims 7 to 9,
wherein respective transmission bursts whose duration is selected individually for the sensor (10) are transmitted with a subsequent break in the data phase.

11. A sensor (10) in accordance with claim 10,
which is configured as a light grid and which transmits and receives cyclic transmission bursts in the data phase in a channel respectively formed by a pair of light transmitter (14) and light receiver (18).

12. A sensor (10) in accordance with any one of the claims 7 to 11,
wherein no transmission burst is transmitted in the external transmitter recognition phase and an external transmitter is recognised if a light beam is nevertheless received.

13. An arrangement of at least two sensors in accordance with any one of the preceding claims, wherein each sensor uses a different modulation frequency and/or a different break duration.

14. A method of detecting objects in which a light beam (20) modulated by a modulation frequency is transmitted and a received signal is generated from the received light beam (20) with respect to which received signal it is recognised whether the received light bream (20) is modulated by the modulation frequency,
**characterised in that**
the received signal is mixed in two part reception paths, once with a first signal of the modulation frequency and once with a second signal of the modulation frequency, said second signal being phase-shifted with respect to the first signal; **in that** the respective mixed signals are individually integrated and are then squared and are subsequently added to one another to form a sum signal; and **in that** an evaluation is made with reference to the sum signal whether a light beam (20) modulated by the modulation frequency was received.

15. A method in accordance with claim 14,
wherein a plurality of sensors simultaneously transmit and receive light signals modulated by a modulation frequency in the form of transmission bursts, wherein the sensors use different modulation frequencies and break durations between the transmission bursts.

## Revendications

1. Capteur optoélectronique (10), en particulier barrière lumineuse, comprenant un émetteur de lumière (14) pour émettre un rayon de lumière (20), un récepteur de lumière (18) pour engendrer un signal de réception, une commande d'émission (24) pour moduler le rayon de lumière (20) avec une fréquence de modulation, et une unité d'évaluation (26) qui est réalisée pour reconnaître, au moyen du signal de réception, si un rayon de lumière (20) modulé avec la fréquence de modulation a été reçue,
**caractérisé en ce que** l'unité d'évaluation (26) comprend deux trajets de réception partiels, tels que le signal de réception est appliqué à leurs entrées respectives, et dont le signal de sortie partiel respectif est amené à un circuit d'addition (38), dans lequel chaque trajet de réception partiel comprend un circuit mélangeur (32a-b), un circuit d'intégration (34a-b) et un circuit de valeur (36a-b), un premier signal avec la fréquence de modulation étant appliqué au circuit mélangeur (32a-b) du premier trajet de réception partiel et un second signal avec la fréquence de modulation, décalé en phase par rapport au premier signal, étant appliqué au circuit mélangeur (32b-a) du second trajet de réception partiel, et **en ce que** l'unité d'évaluation (26, 40) exploite le signal de sortie du circuit d'addition (3 8) pour reconnaître si un rayon de lumière (20) avec la fréquence de modulation a été reçu.

2. Capteur (10) selon la revendication 1,
dans lequel un convertisseur A/N est prévu entre le circuit d'intégration (34a-b) et le circuit de valeur (36a-b).

3. Capteur (10) selon la revendication 1 ou 2,
dans lequel les circuits mélangeurs (32a-b) sont réalisés sous forme de commutateurs.

4. Capteur (10) selon l'une des revendications précédentes,
dans lequel les circuits d'intégration (34a-b) sont réalisés sous forme de filtres passe-bas.

5. Capteur (10) selon l'une des revendications précédentes,
dans lequel, dans l'unité d'évaluation (26, 40), depuis les deux trajets de réception partiels, le signal de réception est amené à un premier et à un second tampon (46a-d) et depuis ceux-ci au circuit mélangeur, dans lesquels un tampon (46b, d) est inverseur et l'autre tampon (46a, c) n'est pas inverseur.

6. Capteur (10) selon l'une des revendications précédentes,
dans lequel dans l'unité d'évaluation (26) un point de masse virtuel est engendré, de sorte que les signaux varient certes autour du point de masse virtuel, mais restent cependant absolument positifs.

7. Capteur (10) selon l'une des revendications précédentes,
dans lequel la commande d'émission (24) et l'unité d'évaluation (26) sont réalisés pour un schéma de codage avec une phase de synchronisation, une phase de données, et une phase de reconnaissance d'émetteur étranger.

8. Capteur (10) selon la revendication 7,
dans lequel dans la phase de synchronisation, au moins deux salves d'émission avec la fréquence de modulation sont émises par la commande d'émission (24) avec une distance temporelle également connue de l'unité d'évaluation (26, 40).

9. Capteur (10) selon la revendication 8,
dans lequel, pendant la réception d'au moins une des salves d'émission et après chaque détection du rayon de lumière modulée avec la fréquence de modulation, l'unité d'évaluation (26) remet à zéro les circuits d'intégration (34a-b) et exploite le nombre des détections à l'intérieur d'une salve d'émission à titre de mesure pour le niveau de réception.

10. Capteur (10) selon l'une des revendications 7 à 9,
dans lequel dans la phase de données des salves d'émission respectives sont émises avec une pause successive, dont la durée est sélectionnée individuellement pour le capteur (10).

11. Capteur (10) selon la revendication 10,
qui est réalisé sous forme de barrière lumineuse et qui émet et qui reçoit de façon cyclique dans la phase de données des salves d'émission dans un canal respectif formé par une paire émetteur de lumière (14)/récepteur de lumière (18).

12. Capteur (10) selon l'une des revendications 7 à 11,
dans lequel dans la phase de reconnaissance d'émetteur étranger aucune salve d'émission n'est émise et un émetteur étranger est reconnu si un rayon de lumière est malgré tout reçu.

13. Agencement d'au moins deux capteurs selon l'une des revendications précédentes, dans lequel chaque capteur utilise une fréquence de modulation différente et/ou une durée de pause différente.

14. Procédé pour détecter des objets, dans lequel un rayon de lumière (20) modulé avec une fréquence de modulation est émis et un signal de réception est engendré à partir du rayon de lumière reçu (20), au moyen duquel on reconnaît si le rayon de lumière reçu (20) est modulé avec la fréquence de modulation, **caractérisé en ce que**
le signal de réception dans deux trajets de réception partiels est mélangé une fois avec un premier signal ayant la fréquence de modulation et une fois avec un second signal ayant la fréquence de modulation, qui est décalé en phase par rapport au premier signal,
**en ce que** les signaux respectivement mélangés sont intégrés individuellement et ensuite élevés au carré et enfin additionnés l'un avec l'autre pour donner un signal de somme, et
**en ce que** l'on procède à un jugement, au moyen du signal de somme, quant à savoir si un rayon de lumière (20) modulé avec la fréquence de modulation a été reçu.

15. Procédé selon la revendication 14,
dans lequel plusieurs capteurs émettent et reçoivent simultanément des signaux de lumière modulés avec une fréquence de modulation, sous la forme de salves d'émission, et les capteurs utilisent des fréquences de modulation différentes et des durées de phase différentes entre les salves d'émission.
